(19) Europäisches Patentamt

European Patent Office

Office européen des brevets

(11) **EP 1 293 949 A1**

(12) **EUROPÄISCHE PATENTANMELDUNG**

(43) Veröffentlichungstag:
19.03.2003 Patentblatt 2003/12

(51) Int Cl.7: **G09B 1/28**, G09B 27/00,
G09B 1/22

(21) Anmeldenummer: 02019689.5

(22) Anmeldetag: 04.09.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **14.09.2001 CH 16962001**

(71) Anmelder: **Häberlin, Marc**
**8008 Zürich (CH)**

(72) Erfinder: **Häberlin, Marc**
**8008 Zürich (CH)**

(74) Vertreter: **Troesch Scheidegger Werner AG**
**Schwäntenmos 14**
**8126 Zumikon (CH)**

(54) **FengShui Scheibe**

(57) Für die Ermittlung von FengShui Astrologiedaten bzw. Bazi Suanming Daten wird eine planimetrische Anordnung (1) wie ein Kreis vorgeschlagen, welche eine Unterteilung in 60 oder gegebenenfalls 120 ca. gleichartige Segmente (3, 5, 7) aufweist. Jedes Segment ist mindestens dem Geburtsjahr derjenigen Person zugeordnet, für welche die Daten zu ermitteln sind. In diesem Segment ebenfalls enthalten sind Angaben bezüglich Stamm, Zweig, sowie dazugehörigem Yin oder Yang.

Fig 1

**Beschreibung**

Die vorliegende Erfindung betrifft eine Anordnung gemäss dem Oberbegriff nach Anspruch 1, sowie eine Anordnung in Form einer Kreisscheibe und ein Verfahren zum Ermitteln von FengShui Astrologiedaten resp. Bazi Suanming-Daten.

Im Zuge der FengShui-Beratung und der zunehmenden Tendenz im Westen, analog wie im fernen Osten die Gesetze des FengShui insbesondere für die Ermittlung persönlicher Daten wie auch in der Architektur und im täglichen Leben zu berücksichtigen, besteht zunehmend auch im Westen ein Bedürfnis im Rahmen dieser Beratung die entsprechenden FengShui-Daten auf eine einfache Art und Weise und möglichst rasch ermitteln zu können. Die Ermittlung von FengShui - Daten bzw. Angaben erfolgt in der Regel mit Hilfe einer Vielzahl von Tabellen, in welchen auf Geburtsdaten einer Person bezogene Angaben enthalten sind. Vielfach müssen zum Ermitteln der Angaben wie Stamm, Zweig, Binominal, mehrere Tabellen konsultiert werden, sowie von einer Tabelle zur anderen gewechselt werden. Dieses Procedere ist sehr zeitintensiv und zudem besitzen in der Regel interessierte Kreise nicht unbedingt die zum Ermitteln der Angaben notwendigen umfangreichen Tabellen.

Es ist daher eine Aufgabe der vorliegenden Erfindung, ein Hilfsmittel zu schaffen, um die erwünschten Angaben ohne die erwähnten Tabellen schnell und auf einfache Art und Weise ermitteln zu können.

Erfindungsgemäss wird eine Anordnung zum Ermitteln von FengShui-Daten für eine bestimmte Person gemäss dem Wortlaut nach Anspruch 1 vorgeschlagen. Die Ermittlung erfolgt dabei gemäss den nachfolgenden 4 Schritte.

1. Die erfindungsgemäss vorgeschlagene Anordnung beinhaltet primär eine planimetrische Grundstruktur, wie einen Kreis, ein Viereck, ein Quadrat, ein Rechteck oder dergleichen, aufweisend eine Unterteilung in sechzig oder gegebenenfalls hundertzwanzig ca. gleichartige Segmente, wobei mindestens ein Segment dem Geburtsjahr der Person, für welche die Daten zu ermitteln sind, zugeordnet ist. Dieses Segment enthält zur Ermittlung der Geburtsjahres-Daten mindestens je eine Angabe bezüglich Stamm und Zweig, sowie den je dazugehörigen Yin oder Yang.

2. Von den sechzig, respektive hundertzwanzig Segmenten, sind jeweils je zwölf Segmente entsprechend den Monaten von Februar bis Dezember einer Geburtsjahresendzahl und Januar der darauf folgenden Jahresendzahl nebeneinander angeordnet und im jeweilig dem Geburtsmonat der Person, für welche die Daten zu ermitteln sind, zugeordneten Segment sind die Geburtsmonatsangaben betreffend Stamm, Zweig, sowie dazugehörigem Yin oder Yang enthalten. Da im chinesischen Kalender der Monatsbeginn jeweils ca. vier bis acht Tage nach dem ersten des jeweiligen Monates beginnt, enthält vorzugsweise die Grundstruktur Angaben über den verschobenen Monatsbeginn, aufgrund der Differenz chinesischer Kalender zu westlichem Kalender. Weiter zu beachten ist, dass bezüglich Jahresendzahl der Monat Januar noch dem Vorjahr zuzurechnen ist,inklusive gegebenenfalls vier bis fünf Tage des nachfolgenden Monats Februar. Mit anderen Worten gilt für Januar sowie die ersten Tage Februar noch die Jahresendzahl des Vorjahres für die Ermittlung der Geburtsmonatsangaben.

3. Jeder Jahreszahl, aufgeführt in einem Segment, ist ein konstanter Wert zugeordnet, welcher sich gemäss der folgenden Korrelation errechnen lässt:

$$\text{Jahreskonstante} =$$

vorgegebener Tabellenwert entsprechend Stamm/ Zweig/

Yin, Yang aufgrund des Geburtstages,

minus eins, falls das Geburtsjahr ein Schaltjahr ist,

minus Monatskonstante (siehe später)

minus Geburtstag.

Die Monatskonstante entspricht jeweils der Anzahl Tage des Vormonates (entsprechend westlichem Kalender) plus Anzahl Tage des Vor-vormonates, sowie plus gegebenenfalls Anzahl Tage des Vor-vor-vormonates minus die Zahl 60, falls die Summe der zwei respektive drei Werte ≥ 60 ist. Dabei beginnt die Zählung mit dem Monat Februar, dessen Monatszahl gleich 31 ist (Januar hat 31 Tage). Die Anzahl Tage des Monates Februar wird immer mit 28 eingesetzt, da das Schaltjahr gemäss oben angeführter Korrelation berücksichtigt wird. Mit anderen Worten beträgt der Wert im Monat März 31 + 28 = 57. Der Wert vom Monat April ist gleich (31 + 28 + 31)- 60 = 30. Der Wert des Monates Mai ist gleich (30 + 30)- 60 = 0.

Die Monatszahlen der weiteren Monate berechnen sich entsprechend.

Da die Jahreskonstante in dem dem Geburtsjahr entsprechenden Segment enthalten ist, kann umgekehrt der erwähnte vorgegebene Tabellenwert gemäss der nachfolgenden Korrelation errechnet werden:

```
Jahreskonstante

+ 1 (falls Geburtsjahr = Schaltjahr; gilt erst für

Geburtstage nach dem 28. Februar des jeweiligen

Schaltjahres),

+ Monatskonstante,

+ Geburtstag
_____

= gesuchter Tabellenwert.
```

Die Monatskonstante ist dabei ebenfalls in der Grundstruktur enthalten, angeführt mindestens in einem Segment, entsprechend dem jeweiligen Geburtsmonat. Jedes Segment ist nun je einem vorgegebenen Tabellenwert, auch bezeichnet als Binominal, zugeordnet, so dass mit dem errechneten Binominalwert im dazugehörigen Segment wiederum der dem Geburtstag zugeordnete Stamm, der Zweig, sowie die dazugehörigen Yin oder Yang entnommen werden können. In der Grundstruktur sind somit 60 verschiedene Binominalwerte enthalten.

4. Schliesslich sind noch die Angaben betreffend der Elemente Stamm und Zweig, sowie dazugehörigem Yin oder Yang für die Geburtszeit zu eruieren. Auch diese Angaben können der planimetrischen Grundstruktur entnommen werden, indem jedes Segment einem Zwei-Stunden-Intervall zugeordnet ist. Zudem sind immer je zwölf Segmente zusammengefasst, umfassend einen Ganztagesintervall (zwölf x zwei Stunden= 24 Stunden), welche Segmente mindestens einem Stamm inklusive dazugehörigem Yin oder Yang zugeordnet sind. Bei einer planimetrischen Grundstruktur umfassend lediglich 60 gleichartige Segmente sind immer je zwölf Segmente zwei Stämmen plus dazugehörigem Yin oder Yang zugeordnet.

Für die Ermittlung von Stamm, Zweig und Yin oder Yang für die entsprechende Geburtsstunde werden nun diejenigen zwölf Segmente ausgewählt, welche demjenigen Stamm plus Yin oder Yang entsprechen, welcher sich aus dem Geburtstag ergeben hat. Durch Auswahl des Geburtsstundenintervalls können im dazugehörigen Segment die Angaben über Stamm, Zweig und dazugehörigen Yin oder Yang entnommen werden.

Aufgrund der oben geschilderten Vorgehensweise können somit aus der erfindungsgemäss vorgeschlagenen planimetrischen Grundstruktur sämtliche Elemente und Yin oder Yang für Geburtsjahr, Geburtsmonat, Geburtstag und Geburtsstunde ermittelt werden.

Dabei kann es sich bei der planimetrischen Grundstruktur beispielsweise um einen Kreis mit 60 gleichen Kreissegmenten, um ein Rechteck mit 60 mehr oder weniger kongruenten, nebeneinander angeordneten Streifenabschnitten, um ein Quadrat, oder eine andersartige planimetrische Grundstruktur handeln, welche leicht in 60 gleiche Segmente unterteilt werden kann. Im Falle eines Kreises können die Angaben betreffend Elemente, wie Stamm und Zweig, in einem Kreisring angeordnet werden, wobei für ein Segment jeweils immer die gleichen Angaben für Stamm und Zweig gelten. Das gleiche trifft zu für die dazugehörigen Yin und Yang- Angaben, welche ebenfalls in diesem Kreisring angeführt werden können.

Ebenfalls in je einem Kreisring können Angaben über Geburtsjahreszahl, dazugehöriger Konstante, Monat, Jahresendzahl, Monatskonstante, Geburtsstundenintervall, Stamm plus dazugehöriger Yin oder Yang-Angabe für die Evaluation von Stamm, Zweig und dazugehörigem Yin oder Yang für die entsprechende Geburtsstunde angeführt werden. Zusätzliche Hilfsmittel, wie konzentrisch drehbare, transparente Kreisscheiben mit Hilfsangaben etc. können ebenfalls angeordnet werden, wie entsprechend längs verschiebliche Schieber im Falle der Verwendung einer rechteckigen Grundstruktur.

Schliesslich können in der erfindungsgemäss vorgeschlagenen planimetrischen Grundstruktur noch zusätzlich Feng-Shui-Astrologie-Angaben enthalten sein, welche analog der oben erwähnten Vorgehensweise durch die Verwendung weiter gehender Gesetzmässigkeiten wiederum unter Verwendung der Grundstruktur ermittelt werden können.

Die Erfindung wird nun beispielsweise und unter Bezug auf die beigefügten Figuren näher erläutert.

Dabei zeigen:

Fig. 1    einen Ausschnitt aus einer kreisscheibenartigen Ausführung der erfindungsgemässen Grundstruktur,

Fig. 2    einen Ausschnitt aus einer rechteckig ausgebildeten planimetrischen Grundstruktur,

Fig. 3    verkleinert und vereinfacht eine erfindungsgemässe Kreisscheibe für das Ermitteln der FengShui Daten, und

Fig.4    einen weiteren Kreisring in Ergänzung zur Darstellung gemäss Figur 4, in welchem die Monatsverschiebungen des jeweiligen Monatsbeginnes vom chinesischen zum westlichen Kalender berücksichtigt sind.

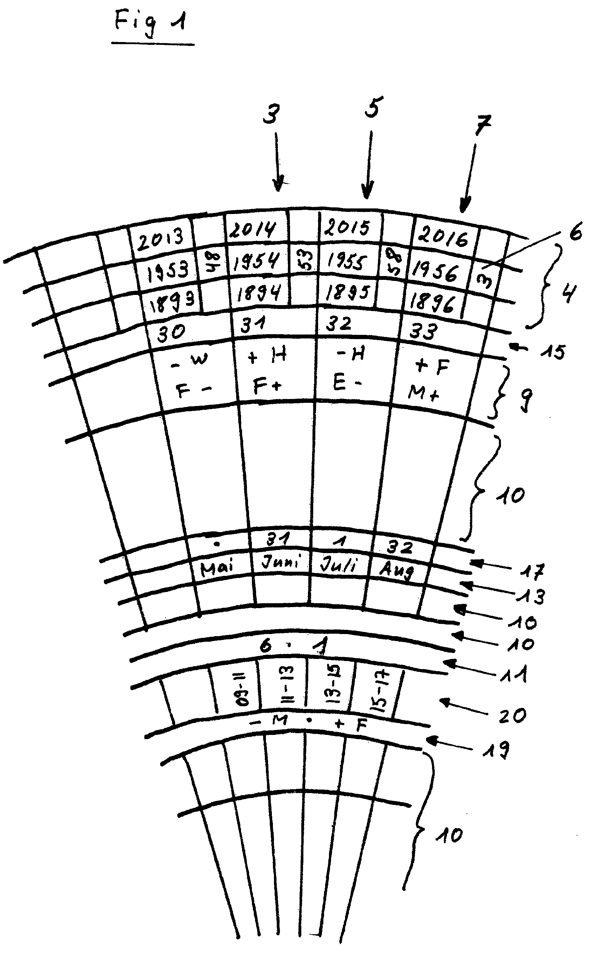

Figur 1 zeigt ausschnittsweise eine Kreisscheibe 1, an sich aufweisend 60 gleiche Kreissegmente, wobei in Figur 1 lediglich die Segmente 3, 5 und 7 dargestellt sind. In jeweiligen Kreisringen sind die einerseits für die Ermittlung der FengShui-Astrologiedaten resp. Bazi-Suanming-Daten notwendigen Angaben enthalten, wie auch die erwähnten FengShui-Daten.

1. Angaben bezüglich Geburtsjahr

In den drei Kreisringen, bezeichnet mit der Bezugszahl 4, sind Angaben bezüglich des Geburtsjahres enthalten, d. h. in Segment 5 beispielsweise ist die Jahreszahl 1955 aufgeführt, womit dieses Segment 5 dem Geburtsjahr 1955 zugeordnet ist. Mit anderen Worten besitzen alle Personen mit Geburtsjahr 1955 die entsprechend in diesem Segment 5 angeführten Elemente, wie im Kreisring 9 angeführt - H/E-. - H bedeutet Yang Holz und E minus bedeutet Yang Erde.

Die Elemente für die Angabe von Stämmen und Zweigen umfassen Erde, Feuer, Metall, Holz und Wasser. Entsprechend dem Dualismus ist jedem Element entweder Yin (+), oder Yang (-) zugeordnet.

2. Angaben bezüglich Geburtsmonat

Für die weitere Ermittlung wird nun die Endzahl des Geburtsjahres genommen, um mittels der Angaben in den Kreisringen 11 und 13 die FengShui Elemente ermitteln zu können, welche dem Geburtsmonat entsprechen. Ist also beispielsweise diejenige Person, für welche die FengShui Daten zu ermitteln sind, im Jahre 1954 geboren, so besitzt die Jahreszahl die Endzahl 4. Im Kreisring 11 ist die Angabe betreffend Jahresendzahl enthalten und wie eingangs erwähnt, sind jeweils immer 12 Kreissegmente neben einander angeordnet, welche derselben Jahresendzahl zugeordnet sind. Im vorliegenden Beispiel, gemäss Figur 1, trifft dies auf die Segmente 3, 5 und 7 zu, da für alle drei Kreissegmente die Jahresendzahl 4 im Kreisring 11 angegeben ist. Übrigens ebenfalls die Jahresendzahl 6, da immer die Angaben bezüglich Geburtsmonat von Stamm und Zweig, sowie dazugehörigem Yin oder Yang für jeweils zwei Jahresendzahlen übereinstimmen. Ist nun diejenige Person, für welche die Daten zu ermitteln sind, beispielsweise im Jahre 1954 geboren, und zwar am 12. August, so sind die entsprechenden Angaben betreffend Stamm und Zweig, sowie dazugehörigen Yin oder Yang dem Kreissegment 7 zu entnehmen. Wiederum sind die Angaben im Kreisring 9 enthalten, womit +F für Yin Feuer steht und M + Yin Metall. Bezüglich der Jahresendzahl ist zu berücksichtigen, dass jeweils der Januar des nächstfolgenden Jahres sowie die ersten Tage Februar der Vorjahresendzahl zuzurechnen sind. Im vorliegenden Beispiel gilt also der Januar 1955 sowie der erste bis vierte Februar 1955 nach wie vor zum Jahr 1954, womit der entsprechende Monat aufgrund der Jahresendzahl vier zu suchen ist.

3. Angaben bezüglich Geburtstag

Für die Ermittlung der Elemente, zugeordnet zum Geburtstag, ist die Jahreskonstante zu Hilfe zu nehmen, welche im entsprechenden Kreisring dem dazugehörigen Geburtsjahr zugeordnet ist. Ausgehend von dieser Jahreskonstante lässt sich der Binominalwert ermitteln, welcher im Kreisring 15 enthalten ist. Dieser Binominalwert lässt sich nach folgender Korrelation errechnen:

Binominalwert=

Jahreskonstante

+ 1 (falls Geburtsjahr gleich Schaltjahr; gilt erst für

Geburtstage nach dem 28. Februar des jeweiligen

Schaltjahres)

+ Geburtstag (entsprechend westlichem Kalender)

+ Monatskonstante, welche in einem entsprechenden

Monatssegment im Kreisring 17 enthalten ist. Dabei ist zu

berücksichtigen, dass für die Monatskonstante der westliche

Kalender zu berücksichtigen ist. Bezüglich der Errechnung

der Monatskonstanten verweisen wir auf die früheren

Ausführungen.

Mit dem nun so ermittelten Binominal wird im Kreisring 15 die entsprechende Zahl gesucht, wie beispielsweise die Zahl 31, womit die Elemente für den Geburtstag in Segment 3 zu suchen sind. Im vorliegenden Fall sind dies Yin Holz und Yin Feuer.

4. Angaben bezüglich Geburtsstunde

Als letztes nun erfolgt die Ermittlung der Elemente für die entsprechende Geburtsstunde. Hierzu wird einerseits der Stamm des Geburtstages verwendet, d. h. im Falle von Segment 3 Yin Holz. Mit dieser Angabe werden im Kreisring 19 die zwölf dazugehörigen Zeitintervalle gesucht. Im vorliegenden Beispiel sind in den Segmenten 3, 5 und 7 keine Angaben im Kreisring 19 zu Yin Holz zu finden. Wie übrigens Kreisring 19 zu entnehmen ist, sind jeweils 12 Intervalle gleich einem Tag immer je zwei Stammangaben zugeordnet, wie im vorliegenden Fall Yang Metall und Yin Feuer.

Wie Figur 1 zu entnehmen ist, ist im Kreissegment 7 die Stammangabe Yin Feuer enthalten, so dass für eine Person, deren Elementangaben bezüglich Geburtstag in Segment 7 enthalten sind, die entsprechenden Angaben für die Geburtstunde in einem der drei Kreissegmente 5, 7, oder 9 enthalten ist, falls die Geburt zwischen 11 und 17 Uhr erfolgt ist, da Yin Feuer im Kreisring 19 aufgeführt ist. Erfolgte die Geburt beispielsweise um 14.30 Uhr, so sind die entsprechenden Angaben über Stamm, Zweig und dazugehörigem Yin oder Yang dem Kreissegment 5 zu entnehmen.

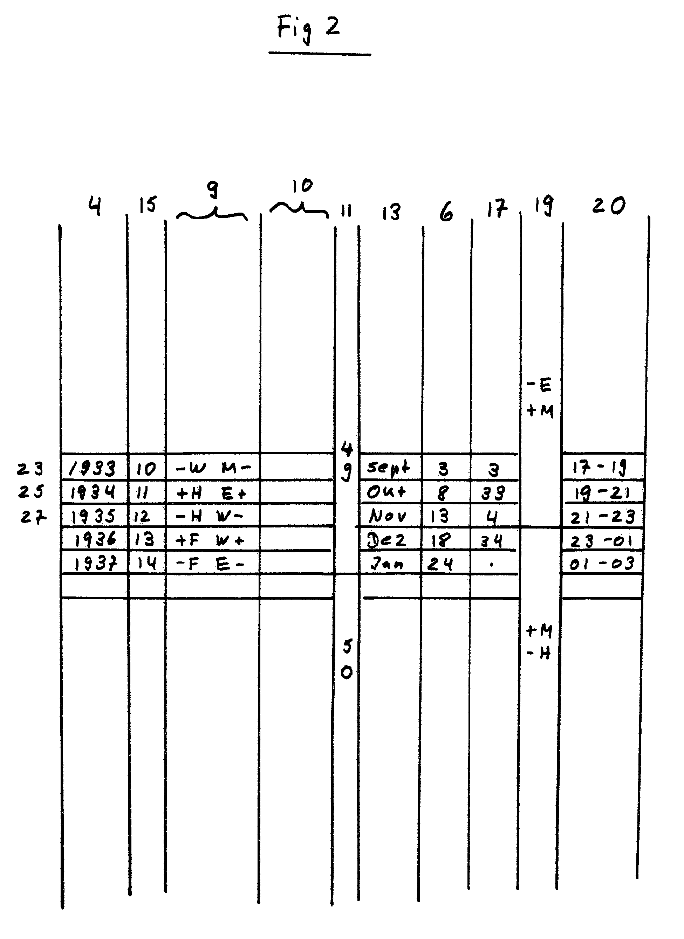

In Figur 2 ist eine rechteckige Grundstruktur 21 dargestellt, in welcher an Stelle der Kreissegmente wie beispielsweise der Segmente 3, 5, 7 aus Figur 1 Streifensegmente gewählt werden, wie beispielsweise die Segmente 23, 25 und 27. Analog sind statt den Kreisringen die jeweiligen Angaben in Kolonnen aufgeführt, wie beispielsweise das Geburtsjahr in Kolonne 4, der Binominalwert in Kolonne 15, die Angaben bezüglich Stamm und Zweig in Kolonne 9, etc. In Abänderung zur Darstellung in Figur 1 ist die Jahreskonstante, welche wesentlich ist für die Errechnung des Binominalwertes, nicht der jeweiligen Jahreszahl in Kolonne 4 beigefügt, sondern in der separaten Kolonne 6 aufgeführt.

Schliesslich ist analog Figur 1 eine Kolonne 10 vorgesehen für das Aufführen zusätzlicher Informationen, wie beispielsweise der Tierkreise, wie in Figur 2 aufgeführt.

Die Ermittlung der FengShui-Astrologiedaten erfolgt analog den Schritten 1-4, wie unter Bezug auf Figur 1 beschrieben.

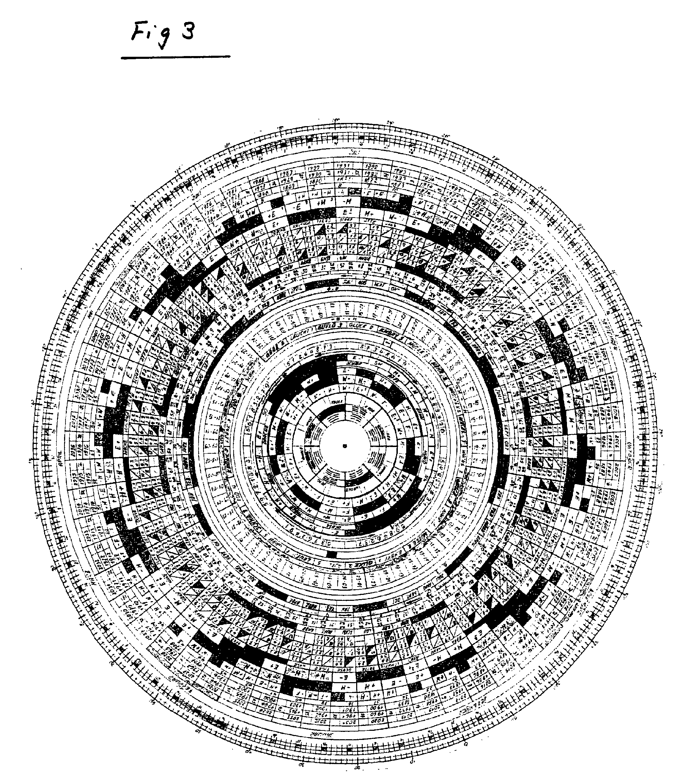

Figur 3 zeigt vereinfacht, verkleinert und schematisch eine ganze Kreisscheibe für die Ermittlung von FengShui-Astrologiedaten.

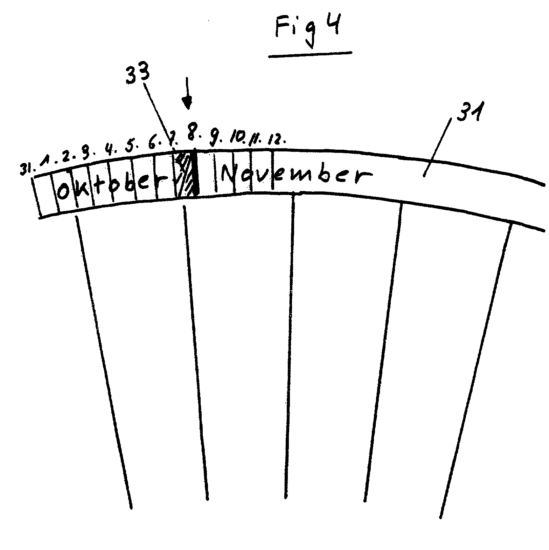

In Figur 4 ist erneut eine sogenannte FengShui Astrologiedaten-Kreisscheibe dargestellt, analog derjenigen in Figur 3. In einem ausserhalb der Jahreszahlenangaben angeordneten Kreisring 31 sind Angaben über den verschobenen Monatsbeginn visualisiert. Im in Figur 4 dargestellten Ausschnitt ist der Übergang vom Oktober zum November dargestellt, wobei aus der Darstellung erkennbar ist, dass der November gemäss chinesischem Kalender am 8.

November gemäss westlichem Kalender beginnt. Mit anderen Worten sind für die Ermittlung der FengShui-Astrologiedaten bezüglich Geburtsmonat der 1. bis 7. November gemäss westlichem Kalender noch dem Oktober gemäss chinesischem Kalender zuzuordnen. Analoges gilt für die übrigen Monatsübergänge, wobei in der Regel die Differenz zwischen chinesischem Kalender und westlichem Kalender innerhalb der Spanne vom 4. bis zum 8. des jeweiligen Monates differiert. Diese Angaben können dem äussersten Kreisring 31 entnommen werden, wobei jeweils der Tag (33) vor und der Tag nach Monatsanfang dann zusätzlich markiert werden kann, wenn der Monatsübergang nicht eindeutig ist. In diesem Falle ist es angezeigt, dass eine Person, welche mittels der erfindungsgemäss vorgeschlagenen Kreisscheibe seine FengShui Astrologiedaten ermitteln will, eine zusätzliche Tabelle konsultiert, um über den genauen Monatsbeginn Aufschluss zu erhalten.

Selbstverständlich handelt es sich bei den Darstellungen in den Figuren 1-4 um relativ einfache Grundstrukturen, welche durch weitere Angaben ergänzt werden können. So ist es beispielsweise möglich, im Kreisring 10, gemäss Figur 1, zusätzliche Angaben anzuführen, welche eine verfeinerte Ermittlung und Analyse der FengShui-Daten für eine Person ermöglichen. In diesem Kreisring 10 können beispielsweise zusätzliche Informationen bezüglich himmlischer Stämme ermittelt werden, d. h. detailliertere Angaben, was insbesondere dann sinnvoll ist, wenn fortgeschrittene Kenntnisse bezüglich FengShui Astrologiedaten bzw. Bazi Suanming-Daten vorliegen. Eine weitere zusätzliche Information im Kreisring 10 kann die Geburtszeitkorrektur beinhalten, welche sich aufgrund des Geburtsortes auf unterschiedlichen Breitengraden innerhalb eines Stundensegmentes ergibt. Mit anderen Worten kann Kreisring 10 eine sog. Geburtszeitkorrektur enthalten. Zudem können die verschiedenen Kreissegmente, Kreisringe, Angaben über Stamm, Zweig, Yin oder Yang, Binominal, etc. mittels unterschiedlicher Farben noch besser herausgehoben bzw. verdeutlicht werden, so dass die Verwendung der Grundstruktur, wie des Kreises, oder des Rechteckes, oder dergleichen zusätzlich vereinfacht werden kann.

## Patentansprüche

1. Anordnung zum Ermitteln von FengShui Astrologiedaten bzw. Bazi Suanming-Daten für eine bestimmte Person **gekennzeichnet durch** eine planimetrische Grundstruktur (1, 21) wie Kreis, Viereck, Quadrat, Rechteck oder dergleichen, aufweisend eine Unterteilung in 60 oder 120 ca. gleichartige Segmente (3, 5, 7, 23, 25, 27), wobei mindestens ein Segment dem Geburtsjahr der Person, für welche die Daten zu ermitteln sind, zugeordnet ist und mindestens eine Angabe bezüglich Stamm und Zweig sowie dazugehörigen Yin oder Yang enthält.

2. Anordnung nach Anspruch 1, **dadurch gekennzeichnet, dass** je zwölf Segmente entsprechend den Monaten Februar-Dezember einer Geburtsjahresendzahl und Januar der darauf folgenden Endzahl neben einander angeordnet sind und im jeweilig dem Geburtsmonat der Person, für welche die Daten zu ermitteln sind, zugeordneten Segment die Angaben entsprechend Stamm, Zweig, sowie dazugehörigem Yin oder Yang enthalten sind, wobei gegebenenfalls zusätzlich in der Grundstruktur Angaben (31) über den verschobenen Monatsbeginn, aufgrund Differenz chinesischem Kalender zu westlichem Kalender, enthalten sind.

3. Anordnung nach einem der Ansprüche 1 oder 2, **dadurch gekennzeichnet, dass** jeder Jahreszahl ein konstanter Wert zugeordnet ist, welcher sich gemäss folgender Korrelation errechnen lässt:

Jahreskonstante =

vorgegebener Tabellenwert entsprechend Stamm/ Zweig und Yin

oder Yang-Angabe aufgrund des Geburtsmonates

- 1, falls Geburtsjahr = Schaltjahr

- Monatskonstante

- Geburtstag,

wobei Monatskonstante = (Anzahl Tage des Vormonates + Anzahl Tage des Vor-vormonates + gegebenenfalls Anzahl Tag des Vor-vor-vormonates ) - 60, falls Summe der zwei, oder gegebenenfalls drei Werte $\geq$ 60, beginnend mit den Angaben für den Monat Februar, für welchen der Wert 31 beträgt, und
wobei die Anzahl Tage im Monat Februar immer mit 28 anzugeben ist.

4. Anordnung nach Anspruch 3, **dadurch gekennzeichnet, dass** jedem Segment ein Binominal zugeordnet ist, für die Ermittlung der sich aus Geburtstag ergebenden Daten bezüglich Stamm, Zweig, sowie Yin oder Yang, wobei sich der entsprechende Binominalwert errechnet aus:

Jahreskonstante (Geburtsjahr)

+ Geburtstag gemäss westlichem Kalender

+ 1 (falls Geburtsjahr gleich Schaltjahr)

+ Monatskonstante

- 60, falls die Summe der ersten vier Werte $\geq$ 60.

5. Anordnung nach einem der Ansprüche 1-4, **dadurch gekennzeichnet, dass** jedem Segment ein Zwei-Stunden-Intervall zugeordnet ist, sich beziehend auf die Geburtszeit der Person, für welche die Daten zu ermitteln sind, wobei immer je Intervalle eines gesamten Tages, d.h. für 24 Stunden mindestens einem Stamm, inklusive Yin/Yang-Angabe, zugeordnet sind, welcher dem Stamm plus Yin/ Yang-Angabe des Geburtstages entspricht.

6. Anordnung nach einem der Ansprüche 1-5, **dadurch gekennzeichnet, dass** die planimetrische Grundstruktur eine Kreisscheibe ist, welche 60 bzw. 120 Kreissegmente aufweist und die Angaben bezüglich Geburtsjahr, Stamm, Zweig, Yin/ Yang-Angabe, Binominal, Monatsangabe, Monatskonstante, Geburtsjahresendzahl, Geburtstundenintervall, dem Geburtstundenintervall zugehörigem Stamm + Yin/ Yang-Angabe, in jeweiligen Kreisringen angeordnet sind.

7. Anordnung nach einem der Ansprüche 1-5, **dadurch gekennzeichnet, dass** die planimetrische Grundstruktur ein Rechteck ist, welches 60 bzw. 120 gleichartige Streifensegmente aufweist, welche quer zur Rechtecklängsausdehnung angeordnet sind und die weiteren Angaben in Längsstreifen enthalten sind.

8. Verfahren zum Ermitteln von FengShui-Astrologiedaten bzw. Bazi Suanming-Daten für eine bestimmte Person unter Verwendung einer Anordnung nach einem der Ansprüche 1-7, **dadurch gekennzeichnet, dass** für die Ermittlung der Geburtsjahresdaten dasjenige Segment ausgesucht wird, welches dem Geburtsjahr der Person entspricht und diesem Segment die Angaben bezüglich Stamm, Zweig sowie dazugehörigem Yin oder Yang entnommen werden, wobei bei der Wahl des Segmentes zu berücksichtigen ist, dass für die Monate Januar sowie die ersten vier bzw. die ersten fünf Tage des Februars das Segment der vorangehenden Jahreszahl auszusuchen ist.

9. Verfahren nach Anspruch 8, **dadurch gekennzeichnet, dass** für die Ermittlung der Geburtsmonatsangaben diejenigen Monate Februar bis Dezember auszuwählen sind, welche der Geburtsjahresendzahl entsprechen, inklusive Januar des darauf folgenden Jahres und im jeweilig dem Geburtsmonat der Person, für welche die Daten zu ermitteln sind, zugeordneten Segment die Angaben entsprechend Stamm, Zweig sowie dazugehörigem Yin oder Yang zu entnehmen sind, wobei gegebenenfalls die Differenz zwischen chinesischem Kalender zu westlichem Kalender dahigehend zu berücksichtigen ist, dass jeweils die ersten vier bis acht Tage eines Monats dem vorangehenden Monat zuzurechnen sind für die Ermittlung der FengShui Astrologiedaten bezüglich Geburtsmonat.

10. Verfahren nach Anspruch 9, **dadurch gekennzeichnet, dass** dasjenige Segment der planimetrischen Grundstruktur ausgewählt wird, welches dem Binominalwert aufgrund des Geburtstages entspricht und dass diesem Segment die Angaben bezüglich Stamm, Zweig sowie Yin oder Yang entnommen werden.

11. Verfahren nach Anspruch 10, **dadurch gekennzeichnet, dass** mittels der Stammangabe plus Yin oder Yang aus dem dem Geburtstag entsprechenden Segment der dazugehörige 24-Stunden-Intervall ermittelt wird und in diesem 24-Stunden-Intervall dasjenige Segment ausgewählt wird, in welchem die Geburtszeit der Person liegt und diesem Segment wiederum die Angaben bezüglich Stamm, Zweig sowie dazugehörigem Yin oder Yang entnommen werden.

# Fig 1

## Fig 2

| | 4 | 15 | 9 | 10 | 11 | 13 | 6 | 17 | 19 | 20 |
|---|---|---|---|---|---|---|---|---|---|---|
| | | | | | | | | | −E +M | |
| 23 | 1933 | 10 | −W M− | | 4 9 | Sept | 3 | 3 | | 17 − 19 |
| 25 | 1934 | 11 | +H E+ | | | Out | 8 | 39 | | 19 − 21 |
| 27 | 1935 | 12 | −H W− | | | Nov | 13 | 4 | | 21 − 23 |
| | 1936 | 13 | +F W+ | | | Dez | 18 | 34 | | 23 − 01 |
| | 1937 | 14 | −F E− | | | Jan | 24 | . | | 01 − 03 |
| | | | | | 5 0 | | | | +M −H | |

Fig 3

Fig 4

**Europäisches Patentamt**

# EUROPÄISCHER RECHERCHENBERICHT

Nummer der Anmeldung

EP 02 01 9689

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 565 374 A (BOURGES PIERRE) 6. Dezember 1985 (1985-12-06) * Zusammenfassung * * Seite 1, Zeile 6 - Seite 5, Zeile 20 * * Abbildungen 1-3 * | 1-11 | G09B1/28 G09B27/00 G09B1/22 |
| X | US 4 189 853 A (PROVENZANO JACK) 26. Februar 1980 (1980-02-26) * Zusammenfassung * * Spalte 1, Zeile 56 - Spalte 2, Zeile 23 * * Spalte 2, Zeile 47 - Spalte 5, Zeile 2 * * Abbildungen * | 1-11 | |
| X | US 3 992 787 A (LYNCH JOHN PATRICK) 23. November 1976 (1976-11-23) * Zusammenfassung * * Spalte 1, Zeile 33 - Spalte 2, Zeile 43 * * Abbildungen * | 1-11 | |
| X | US 2 518 664 A (BOOTH CHERN MARGARET) 15. August 1950 (1950-08-15) * Spalte 1, Zeile 58 - Spalte 2, Zeile 28 * * Spalte 3, Zeile 17 - Spalte 5, Zeile 25 * * Abbildungen * | 1-11 | RECHERCHIERTE SACHGEBIETE (Int.Cl.7) G09B |
| X | US 3 936 957 A (NORDBYE ROBERT B) 10. Februar 1976 (1976-02-10) * Zusammenfassung * * Spalte 1, Zeile 36 - Spalte 2, Zeile 14 * * Spalte 2, Zeile 56 - Spalte 3, Zeile 3 * * Abbildungen * | 1-11 | |

-/--

Der vorliegende Recherchenbericht wurde für alle Patentansprüche erstellt

| Recherchenort | Abschlußdatum der Recherche | Prüfer |
|---|---|---|
| MÜNCHEN | 18. November 2002 | Königer, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 02 01 9689

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 315 316 A (EUGENE CISSNA ELTON) 30. März 1943 (1943-03-30) * Spalte 1, Zeile 4 - Zeile 14 * * Spalte 2, Zeile 6 - Zeile 30 * * Spalte 3, Zeile 30 - Spalte 4, Zeile 34 * * Abbildungen * | 1-11 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 18. November 2002 | Königer, A |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 01 9689

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2002

| Im Recherchenbericht angeführtes Patentdokument | | Datum der Veröffentlichung | Mitglied(er) der Patentfamilie | | Datum der Veröffentlichung |
|---|---|---|---|---|---|
| FR 2565374 | A | 06-12-1985 | FR | 2565374 A1 | 06-12-1985 |
| US 4189853 | A | 26-02-1980 | FR<br>GB<br>JP | 2440047 A1<br>2037044 A ,B<br>55061830 A | 23-05-1980<br>02-07-1980<br>09-05-1980 |
| US 3992787 | A | 23-11-1976 | KEINE | | |
| US 2518664 | A | 15-08-1950 | KEINE | | |
| US 3936957 | A | 10-02-1976 | KEINE | | |
| US 2315316 | A | 30-03-1943 | KEINE | | |

EPO FORM P0461

Für nähere Einzelheiten zu diesem Anhang : siehe Amtsblatt des Europäischen Patentamts, Nr.12/82